# EUROPEAN PATENT SPECIFICATION

(11) **EP 3 314 975 B1**
(45) Date of publication and mention of the grant of the patent: **09.03.2022**
(21) Application number: 15753321.7
(22) Date of filing: 24.06.2015
(51) Int. Cl.: H04W 76/15, H04B 7/022

(54) **MULTIPLE CONNECTIVITY**
MEHRFACHKONNEKTIVITÄT
CONNECTIVITÉ MULTIPLE

(43) Date of publication of application: 02.05.2018
(73) Proprietor: Nokia Solutions and Networks Oy, 02610 Espoo (FI)
(72) Inventor: SELVAGANAPATHY, Srinivasan, Bangalore 560117 (IN); ALI, Amaanat, Bangalore 560 045 (IN); SAILY, Mikko, 07150 Laukkoski (FI)
(74) Representative: Nokia EPO representatives
(86) International application number: PCT/EP2015/064221
(87) International publication number: WO 2016/206733

(56) References cited:
- WO-A1-2013/022451
- US-A1- 2013 028 069
- US-A1- 2015 156 809
- MOULY M ET AL: "The GSM system for mobile communications", 1 January 1992 (1992-01-01), GSM SYSTEM FOR MOBILE COMMUNICATIONS. COMPREHENSIVE OVERVIEW OF THE EUROPEAN DIGITAL CELLULAR SYSTEMS, CELL & SYS, FRANCE, PAGE(S) 366 - 384, XP002194765, ISBN: 978-2-9507190-0-3 pages 368,374; figures 6.19,6.21
- None

## Description

### Field

The invention relates to communications.

### Background

The increasing traffic load will require more cells and more capacity to cope with the expected throughput. Small cells and heterogeneous networks (HetNets) are introduced to provide more capacity. Heterogeneous networks are often indicated as the use of multiple types of access nodes in a wireless network, such as macrocells, picocells, and/or femtocells in order to offer wireless coverage in an environment with a wide variety of wireless coverage zones, ranging from an open outdoor environment to office buildings, homes, and underground areas.

Dual connectivity (Inter-site Carrier Aggregation) - i.e. carrier aggregation between sites - is an attractive solution for HetNets that do not have an ideal backhaul network. Dual connectivity allows mobility management to be maintained on the macro layer while aggregating small cells to provide extra user plane capacity, thus increasing the throughput.

As part of recent discussions related to 5G system, one important capability of the UE is having multiple Radio-interface (RI) connection from different nodes for RRC connection. Multiple radio interface connections for single UE allow enhanced throughput and also mobility robustness in deployments which have different types of radio interface nodes. This can be seen as extension of the LTE dual connectivity where LTE UE is served by two independent schedulers to achieve enhanced per user throughput. One difference will be the nodes involved in the multi-link connectivity may have different L1/L2 characteristics since the operating frequencies of each of these radio interfaces may be in quite different wavelengths. Accordingly, the radio interfaces could be wide area (less than 6 GHz), cmW (6-30 GHz) and mmW (beyond 30 GHz).

US 2013/0028069 discloses a method of performing wireless communication in a wireless transmit/receive unit (WTRU) configured for multi-radio access technology (RAT) operation: the WTRU wirelessly communicates information on a first operating frequency according to a first RAT, the WTRU wirelessly communicating information on a second operating frequency according to a second RAT. The first RAT is one of long term evolution (LTE) and high speed protocol access (HSPA) and the second RAT is one of HSPA, LTE and WiFi. The WTRU establishes a radio resource control (RRC) connection in the first RAT using an RRC instance, the WTRU receives a configuration for at least one serving cell of the second RAT over the RRC connection and the WTRU configures radio resources for the second RAT using the RRC instance.

WO 2013/022451 discloses systems, apparatus and methods for performing random access in carrier aggregation. A user equipment (UE) transmits a random access preamble to a secondary access device of a second carrier, where the UE is served by both a primary access device and the secondary access device, and the UE is configured to attempt a total number of blind decoding attempts for decoding physical downlink control channel candidates of a UE- specific search space of the second carrier. The UE performs a first blind decoding of first PDCCH candidates of the common search space of the second carrier, and performs a second blind decoding of second PDCCH candidates of the UE specific search space of the second carrier. A number of blind decoding attempts for the first and second blind decodings is less than or equal to the configured total number of blind decoding attempts.

### Summary

The invention is defined by the appended claims.

### List of drawings

Some embodiments of the present invention are described below, by way of example only, with reference to the accompanying drawings, in which
Figure 1 illustrates an example of a system;
Figure 2 shows an example of apparatus for use at the communication device of Figure 1;
Figure 3 shows an example of apparatus for use at the access nodes of Figure 1;
Figure 4 is a signaling chart;
Figure 5 is a flow chart;
Figure 6 is another flow chart, and
Figure 7 is yet another flow chart.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

Embodiments are applicable to any user device, such as a user terminal, as well as to any network element, relay node, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are 5G, the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile adhoc networks (MANETs) and Internet Protocol multimedia subsystems (IMS) or any combination thereof.

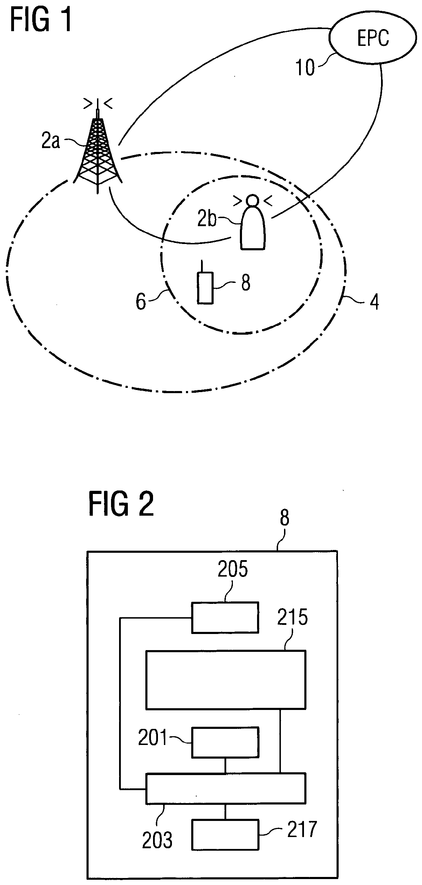

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties. Another example of a suitable communications system is the 5G concept. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates. 5G will likely be comprised of more than one radio access technology (RAT), each optimized for certain use cases and/or spectrum. 5G mobile communications will have a wider range of use cases and related applications including video streaming, augmented reality, different ways of data sharing and various forms of machine type applications, including vehicular safety, different sensors and real-time control.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent. Some other technology advancements probably to be used are Software-Defined Networking (SDN), Big Data, and all-IP, which may change the way networks are being constructed and managed.

Figure 1 only shows two eNodeBs (eNBs) 2a, 2b with overlapping coverage areas 4, 6, but a cellular network will typically comprise thousands of access points providing substantially continuous coverage over a wide geographical area. Only one cell is shown for each eNB 2 in Figure 1, but a single eNB 2 may simultaneously operate two or more cells. The two eNBs 2a, 2b may communicate via an inter-eNB X2 interface and with an evolved packet core (EPC) network via S1 interfaces. A cellular radio access network will also typically include other elements such as resource management entities etc., but these are not shown in Figure 1 for conciseness.

The communication system is also able to communicate with other networks, such as a public switched telephone network or the Internet. The communication network may also be able to support the usage of cloud services. It should be appreciated that (e)NodeBs or their functionalities may be implemented by using any node, host, server or access point etc. entity suitable for such a usage.

The communication system may also comprise a central control entity, or a like, providing facilities for networks of different operators to cooperate for example in spectrum sharing.

Figure 2 shows a schematic view of an example of user equipment 8 that may be used for communicating with at least the eNBs 2 of Figure 1 via a wireless interface. The user equipment (UE) 8 may be used for various tasks such as making and receiving phone calls, for receiving and sending data from and to a data network and for experiencing, for example, multimedia or other content.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (loT) network which is a scenario in which objects are provided with the ability to transfer data over a network without requiring human-to-human or human-to-computer interaction.

The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

The UE 8 may communicate via an appropriate radio interface arrangement of the UE 8. The interface arrangement may be provided for example by means of a radio part and associated antenna arrangement 205. The antenna arrangement may be arranged internally or externally to the UE 8, and may include a plurality of antennas capable of operating in a multi-layer transmission scheme.

The UE 8 may be provided with at least one data processing entity 203 and at least one memory or data storage entity 217 for use in tasks it is designed to perform. The data processor 203 and memory 217 may be provided on an appropriate circuit board and/or in chipsets.

The user may control the operation of the UE 8 by means of a suitable user interface such as key pad 201, voice commands, touch sensitive screen or pad, combinations thereof or the like. A display 215, a speaker and a microphone may also be provided. Furthermore, the UE 8 may comprise appropriate connectors (either wired or wireless) to other devices and/or for connecting external accessories, for example hands-free equipment, thereto.

Figure 2 shows an example of a UE including a user interface, but the UE may also be a communication device without any user interface, such as a device that is designed for machine type communications (MTC).

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

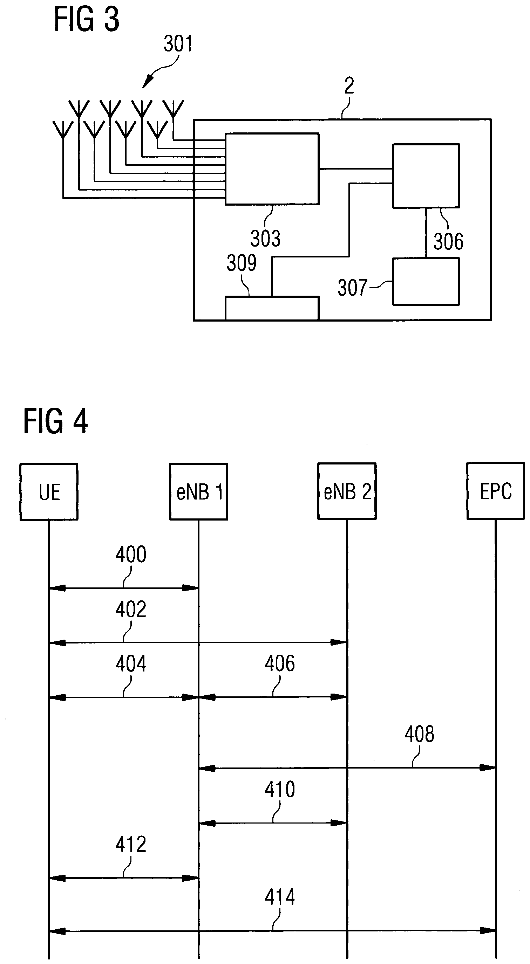

Figure 3 shows an example of apparatus for use at the eNBs 2 of Figure 1. The apparatus comprises a radio frequency antenna array 301 configured to receive and transmit radio frequency signals; radio frequency interface circuitry 303 configured to interface the radio frequency signals received and transmitted by the antenna array 301 and the data processor 306. The radio frequency interface circuitry 303 may also be known as a transceiver. The apparatus also comprises an interface 309 via which it can send and receive information to and from one or more other network nodes such as the core network 10 and other eNBs 2. The data processor 306 is configured to process signals from the radio frequency interface circuitry 303, control the radio frequency interface circuitry 303 to generate suitable RF signals to communicate information to the UE 8 via the wireless communications link, and also to exchange information with other network nodes via the interface 309. The memory 307 is used for storing data, parameters and instructions for use by the data processor 306.

It is obvious for a person skilled in the art that the depicted system is only an example of a part of a radio access system and in practise, the system may comprise a plurality of (e)NodeBs, the user device may have an access to a plurality of radio cells and the system may comprise also other apparatuses, such as physical layer relay nodes or other network elements, etc. At least one of the NodeBs or eNodeBs may be a Home(e)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto- or picocells. The (e)NodeBs of Figure 1 may provide any kind of these cells. A cellular radio system may be implemented as a multilayer network including several kinds of cells. Typically, in multilayer networks, one node B provides one kind of a cell or cells, and thus a plurality of (e) Node Bs are required to provide such a network structure.

Recently for fulfilling the need for improving the deployment and performance of communication systems, the concept of "plug-and-play" (e)NodeBs has been introduced. Typically, a network which is able to use "plug-and-play" (e)Node Bs, includes, in addition to Home (e)NodeBs (H(e)nodeBs), a home node B gateway, or HNB-GW (not shown in Figure 1). A HNB Gateway (HNB-GW), which is typically installed within an operator's network may aggregate traffic from a large number of HNBs back to a core network.

In the following, embodiments suitable for multi-connection operation are disclosed in further detail. In 5G, an underlying wide area layer (generated by a macro node) is supposed to have the potential to act as the coordination layer, by directing the device's connection down to coordinating the scheduling of different cells in a small cell layer(s). The wide area layer can also act as the signaling connection layer, maintaining control plane connectivity while the user plane is handed over to small cells.

It should be appreciated that in 5G it is possible that a node acts as a data-offloading secondary node without overhead channels. For these deployments, a secondary, or an additional capacity-improving, radio connection should be established via a macro-node operating as an umbrella node or a wide area node. This may also apply to multi-RAT connections. The macro node or cell may be called as a primary cell and additional cells may be called as secondary cells. There may be one or more secondary cell connections per a user device. Multi-connectivity or multi-connection operation may thus mean a user device having simultaneously a connection to a primary cell and a connection to each (one or more) secondary cell.

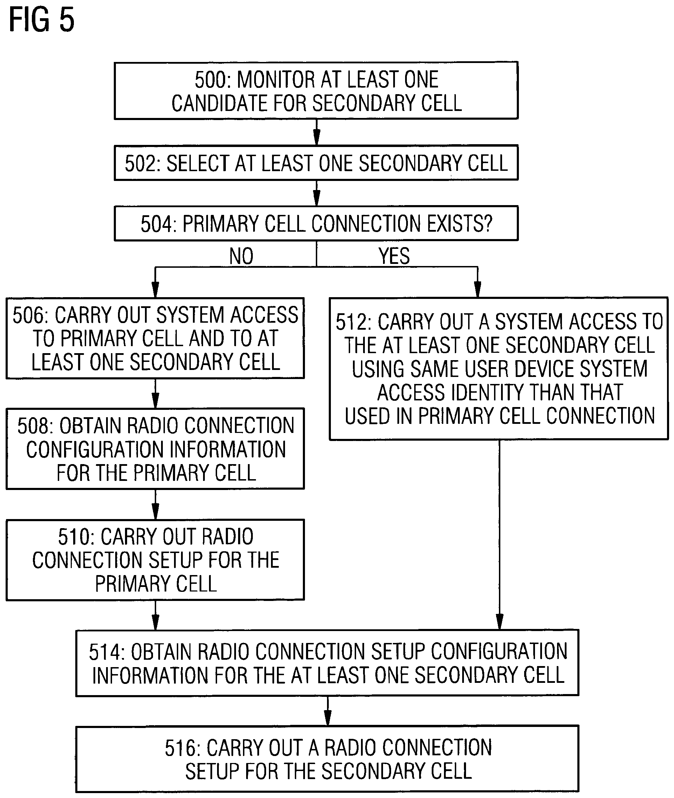

One embodiment is depicted by means of Figure 5. This embodiment may be carried out by a user device.

In block 500, at least one candidate for a secondary cell is monitored.

Monitoring a cell may be carried out by measuring a beacon signal sent (unicast, multicast, broadcast) by a node providing the cell. Parameters measured may be signal-to-noise ratio, signal-to-noise and interference ratio, quality of service, bit error rate, etc. Monitoring may be carried out as a normal monitoring a user device carries out or the monitoring may be specially triggered for establishing a multi-connectivity operation mode. The measurements and/or monitoring may be carried out as a part of idle mode measurements and/or monitoring.

It should be appreciated that monitoring cells also provides a user device an option to acquire system information of cells. The system information may be used in system access procedure. The system information may comprise channel bandwidth, carrier frequency, timing reference, network identification and/or random access channel configuration, which helps a user device start random access procedure (such as preamble information, transmission time in terms of frame and subframe number and transmission power). The system information may vary radio system specifically. For acquiring the system information, the user device may use the receiver of another radio interface to avoid interruption of the reception in the primary radio interface.

It should be understood that as the monitoring may be a part of a user device's idle more operation, information obtained by monitoring for a primary cell connection may be stored and used for secondary cell selection. Monitoring at least one candidate for a secondary cell may be carried out by specifically listening to beacon signals of small cells for a secondary cell connection or it may be a part of general monitoring, when all cells in the area are monitored without making a difference between macro cells or small cells.

In one embodiment, when the user device is connected to the primary cell, the system information for secondary cells may be passed by using dedicated signalling.

In block, 502, at least one of the at least one candidate for the secondary cell is selected as a secondary cell.

The user device has a radio interface connection to the serving primary cell. Non-access stratum (NAS) functionality such as security key exchange and mobility information are provided by the primary cell. All secondary bearers are understood as additional transmission resources. Thus, multi-connectivity is considered to include a primary cell radio interface connection and one or more secondary cell radio interface connections. The primary cell is thought to operate as a master cell taking care of needed controlling.

A secondary cell is selected among the candidates, for example among all the small-cells the user device is able to hear or carry out reception in an adequate manner. The selection may be based on one criterion or a plurality of criteria, such as measured signal-to-noise ratio, signal-to-noise and interference ratio, quality of service, bit error rate, services supported, mobility characteristics of the user device. Additionally or as another option, network may broadcast/unicast specific rules on how to select a secondary cell (service-specific, capability-specific, mobility-profile specific, etc. (the mobility profile may be based for example on a mobility pattern that is to say is the user device moving fast or slow or is it still at the moment, history information may also be used).

In one option, if no primary cell connection exists (block 504 no), a system access to a primary cell and to the at least one secondary cell is carried out, wherein the system access to the primary cell and to the at least one secondary cell comprise a same user device system access identity (block 506). Radio connection configuration information for the primary cell is obtained in a response to the system access to the primary cell (block 508) and a radio connection setup for the primary cell is carried out based on the radio connection configuration information (block 510). The radio connection configuration information for the primary cell may be received from the primary cell. In another option, if a primary cell connection exists (block 504 yes), there is no need to establish a primary connection and thus a system access to the at least one secondary cell is carried out by using a same user device system access identity than that used in the primary cell connection (block 512). It should be appreciated that if a connection to a primary cell already exists, it is not re-established in this stage, unless there is a specific reason to do so, for example a poor radio quality.

System access (both primary and secondary) may be carried out in a similar fashion to a random access procedure of the LTE or in any manner suitable for accessing a radio cell. Specific procedure steps and information conveyed may vary. It should be understood that the primary cell and the at least one secondary cell may utilise different radio access technologies and the same applies to the secondary cells in the case more than one secondary cells are involved.

The system access identity may be a contention resolution identity as in the LTE, or a corresponding radio access or random access identity based on which the user device requesting an access to a cell can be identified (of contention resolution identity type). For multi-connectivity, the system access identity for one user device is the same for all connections, be it primary or secondary. This simplifies the control of the connections for multi-connectivity operation. The system access may also comprise an additional identifier based on which the secondary node is able to identify the master node providing the primary cell. The additional identifier may not be needed, if the secondary cell is only connected to one master cell.

A radio connection configuration may comprise a radio bearer specifying the configuration for Layer-2 and Physical Layer. Configuration in general means configuring needed resources for data transmission via a radio interface. The exact information may vary radio system specifically.

Then, in the both options described above, in block 514, radio connection setup configuration information for the at least one secondary cell is obtained in a response to the system access to the at least one secondary cell.

The radio connection configuration information for the at least one secondary cell may be received from the primary cell.

A radio connection configuration may comprise a radio bearer specifying the configuration for Layer-2 and Physical Layer. Configuration in general means configuring needed resources for data transmission via a radio interface. The exact information may vary radio system specifically.

In block 516, a radio connection setup for the secondary cell is carried out. The radio connection setup is carried out based on the radio connection configuration information.

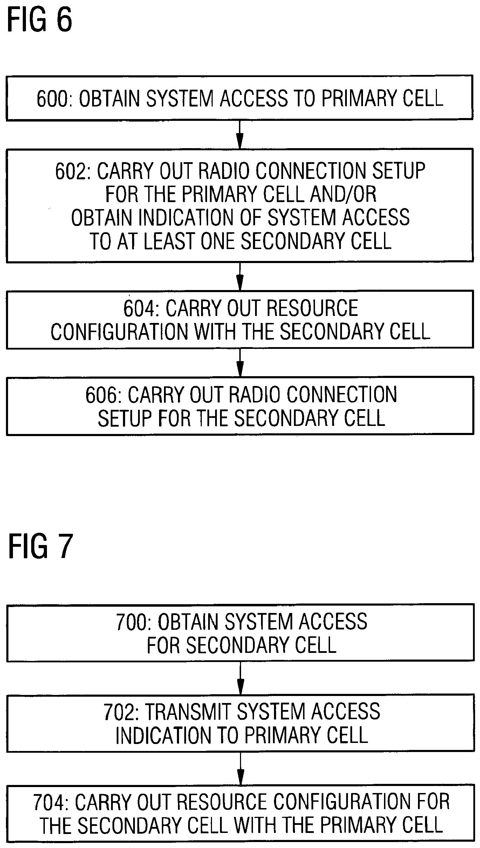

Another embodiment is illustrated by means of Figure 6. This embodiment is suitable to be carried out by a master node or a primary cell which may be a macro cell.

In block 600, a system access to a primary cell from a user device is obtained.

System access may be carried out in a similar fashion to a random access procedure of the LTE or in any manner suitable for accessing a radio cell. Specific procedure steps and information conveyed may vary.

In block 602, a radio connection setup for the user device for the primary cell is carried out in a response to the system access and/or an indication of a system access of the user device to at least one secondary cell is obtained from the at least one secondary cell. It should be appreciated that if a connection to a primary cell already exists, it is not re-established in this stage, unless there is a specific reason to do so, for example a poor radio quality.

The radio connection setup may be carried out in a similar fashion to that of the LTE or in some other manner used in another radio system. It should be understood that the primary cell and the at least one secondary cell may use different radio access technologies as 5G will likely be comprised of more than one radio access technology (RAT), each optimized for certain use cases and/or spectrum.

The radio connection setup for the user device for the primary cell is carried out and the indication of a system access of the user device to at least one secondary cell is obtained in an independent fashion meaning that the primary cell does not wait for the indication before carrying out the radio connection setup.

In one embodiment, the primary cell transmits as a part of a system information random access channel allocation to possible secondary cells in its coverage area. The allocation may be secondary cell-specific and identified by using a physical cell identifier of the secondary node at issue. It should be appreciated that a primary node does not have to configure or prepare candidate cell for a secondary cell in advance, but it is sufficient to provide mapping of common random access channel parameters identified by a physical cell identity (PCI). Based on this information, a user device may access a secondary cell, for example by contention based RACH procedure or like.

In one embodiment, when the user device is connected to the primary cell, the system information for secondary cells may be passed by using dedicated signalling, for example as a general secondary connection information (not specified to a certain secondary cell) or as a secondary-cell-specific information. The dedicated signalling may be a unicast, multicast or broadcast type signalling.

In one embodiment, specific rules on how a user device should select a secondary cell (service specific, capability specific, mobility profile specific, etc) are broadcast/unicast.

In block 604, a resource configuration for the user device with the secondary cell is carried out in response to the obtaining the indication.

The resource configuration for the secondary cell connection of the user device is carried out in cooperation with the secondary cell providing the primary cell an option to control the multi-connectivity operation. For example, bearer allocation may be made by the secondary node and informed to the primary node or vice versa. The bearer may also be negotiated taking into consideration the resource reservation and interference situation of both nodes. The indication acts as a trigger to the allocation procedure.

In block 606, a radio connection setup for the user device for the secondary cell is carried out based on the resource configuration.

The radio connection setup may be carried out by using a RRC connection reconfiguration message of the LTE or in any suitable fashion depending on the radio access technology.

An example not falling under the scope of the claims is illustrated by means of Figure 7. This embodiment is suitable to be carried out by a secondary cell which may be a small cell.

In block 700, a system access for a secondary cell is obtained from a user device.

System access may be carried out in a similar fashion to a random access procedure of the LTE or in any manner suitable for accessing a radio cell. Specific procedure steps and information conveyed may vary. The system access typically comprises a system access identity. The system access identity may be a contention resolution identity as in the LTE, or a corresponding radio access or random access identity based on which the user device requesting an access to a cell can be identified. The system access may comprise information on a primary cell such as an additional identifier based on which the secondary node can identify the master node.

In block 702, a system access indication of the user device is transmitted to the primary cell.

The system access indication may be a message comprising a system access identity of the accessing user device. The message may also comprise a secondary cell identity. The system access indication may act as a trigger to secondary cell resource configuration.

In block 704, resource configuration for the user device for the secondary cell is carried out with the primary cell.

The resource configuration for the secondary cell connection of the user device is carried out in cooperation with the secondary cell providing the primary cell an option to control the multi-connectivity operation. For example, bearer allocation may be made by the secondary node and informed to the primary node or vice versa. The bearer may also be negotiated taking into consideration the resource reservation and interference situation of both nodes. The indication acts as a trigger to the allocation procedure.

The following description relates to a more detailed example of establishing multi-connectivity (multi-connection operation) depicted by means of Figures 2 and 4. It should be understood that it is shown only as an example and it should not be taken as limiting the applicability of embodiments. In Figure 4, operations of different apparatuses are shown together, thus providing a system view on the operations of a user device, primary cell and secondary cell. The example of Figure 4 is based on the LTE which is an example of applicable radio access technologies.

In this example, UE 8 begins in (radio resource control) RRC IDLE mode with no data to send or receive to the core network 10. UE 8 is not connected to any eNB 2 but is camped in RRC IDLE mode on one or more cells selected by the UE 8 based on reference signal measurements and selection rules/frequency layer priority information. When there is data to send from the UE 8 or the UE 8 becomes aware of data ready for sending to the UE 8, the UE 8 initiates radio connections via two cells operated by different access nodes 2a, 2b selected by the UE 8 on the basis of selection rules/frequency layer priority information The selection rules/frequency layer priority information mentioned above may be broadcast via one or more cells of the network, and may be e.g. service-specific, capability-specific, or mobility-profile specific etc.. The two cells selected by the UE 8 for the radio connections may have equal or different priority levels.

In this example, the two cells selected by the UE 8 include a macro cell operated by a macro eNB 2a and a smaller non-macro cell operated by a small cell eNB 2b.

The initiation of a radio connection via a cell begins with the UE 8 transmitting a contention-based random access channel (RACH) request (RACH Msg1) via the respective cell. The UE 8 transmits the RACH Msg1 via radio resources identified in system information for the cell broadcast via the respective cell (or, as discussed below, in system information for the cell broadcast by the other of the two cells); and the RACH Msg1 identifies a preamble index selected by the UE 8 from a group of preamble indices forming part of the RACH configuration included in the broadcasted system information for the respective cell.

When an eNB 2 detects a RACH Msg1 via a cell it operates, the eNB 2 transmits a random access response (RAR) message (RACH Msg2) within a predetermined resource window. The RACH Msg2 includes at least: the RA preamble included in the RACH Msg1; timing alignment information; information about uplink (UL) resources (initial UL grant) for a subsequent RACH message (RACH Msg3), discussed below; and a temporary radio network identifier (Temporary Cell Radio Network Temporary Identifier - Temporary C-RNTI).

The UE 8 checks in the above-mentioned radio resource window for a RACH Msg2 including the same preamble index as that included by the UE 8 in its RACH Msg1. If the UE 8 detects such RACH Msg2, the UE 8 generates a RRC (Radio Resource Control) Connection Request message (RACH Msg3), and transmits RACH Msg3 via the UL grant radio resources identified in RACH Msg2 and using the timing alignment information included in RACH Msg2. RACH Msg3 is the first RACH message in the contention-based random access procedure to use a signalling radio bearer (SRB0). RACH Msg3 includes at least: the C-RNTI identified in RACH-Msg2; a contention resolution identifier; and, in the case of the small cell, an identification of the macro cell via which the UE is in initiating a second radio connection in parallel. The contention resolution identifier may be a random value generated at the UE 8 (or a UE identifier (such as a temporary mobile subscriber identity (TMSI) previously used by the UE 8 if the UE 8 happens to have previously connected to the core network). The contention resolution identifier is included as a tool to resolve collisions in the event that more than one UE responded to the same RACH Msg2, as discussed further below.

The eNB 2 responds to RACH Msg3 with a RRC Connection Setup message (RACH Msg 4), which includes at least: the contention resolution identifier included in the RACH Msg3; and configuration details for an additional signalling radio bearer (SRB1) for later messages transferred via the cell between the UE 8 and the eNB 2.

In the event that two (or more) UEs happen to coincidentally transmit RACH request messages (RACH Msg1) with the same preamble via the same RACH radio resource, the eNB 2 may not successfully detect either of the RACH request messages, or may successfully detect only one of the RACH request messages. Both UEs may detect the RACH Msg2 transmitted in response by the eNB, and both may transmit RACH Msg3, but the timing alignment information included in RACH Msg2 will only be correct for one of the UEs (i.e. the UE whose RACH Msg1 was successfully detected by the eNB 2). In the event of such a collision, a UE first knows that it has been successful when detecting RACH Msg4 including the contention resolution identifier included by that UE in RACH Msg3.

As mentioned above, the UE 8 performs the random access procedures (steps 400 and 402 in Figure 4) for two cells operated by different eNBs 2a, 2b in parallel and using the same contention resolution identifier for both cells. Also, as mentioned above, the UE 8 includes in RACH Msg3 for the small cell an indication of the parallel initiation of a radio connection with the macro cell eNB 2a via a contention-based random access procedure. The small cell eNB 2b informs the macro cell eNB 2a via the inter-eNB X2 interface of the successful completion of the random access procedure for the UE 8 in the small cell (steps 406), at about the same time that the UE 8 and the macro eNB 2a are exchanging RRC configuration messages (step 404 in Figure 4) after RACH Msg 4 for the macro cell.

The macro cell eNB 2a adopts the role of master eNB (MeNB), and acquires from the core network 10 (via the S1 interface) EPS (Evolved Packet System) bearer configuration information for the transfer of data between the UE 8 and the core network 10 (step 408 of Figure 4). The receipt of this EPS bearer configuration information at the MeNB 2a triggers the sending from the MeNB 2a to the other eNB 2b (secondary eNB (SeNB)), via an inter-eNB X2 interface, a request for configuration information for a radio bearer between the UE 8 and the SeNB 2b for the EPS bearer (step 410 of Figure 4). The request message identifies the UE 8 by means of the contention resolution identifier used in RACH Msg3 mentioned above. SeNB 2b responds by sending the requested configuration information to MeNB 2a (step 410 of Figure 4). The configuration information sent by SeNB 2b to MeNB 2a does not need to include RACH resource information because the random access procedure has already been completed for the small cell, and there already exists a synchronised RRC connection between the UE 8 and the SeNB 2b.

MeNB 2a transmits the small cell radio bearer configuration information received from SeNB 2b to the UE 8 in an RRC Connection Reconfiguration (RCR) message (step 412 of Figure 4).

UE 8 uses configuration information received from MeNB 2a to configure itself for both the simultaneous radio connections (i.e. the radio connection with the MeNB 2a and the radio connection with the SeNB 2b) for the transfer of data between the UE 8 and the core network 10 via both simultaneous radio connections (steps 414). No further RACH procedure is required before this user-plane activity can begin.

As described above, the UE 8 initiates radio connections with both eNBs 2a, 2b without waiting to first complete the set-up of one radio connection with one of the eNBs. In one variation of the above-described technique, the UE 8 may proceed further and exchange configuration information with the SeNB 2b via SRB1 (such as information for configuring a further signalling radio bearer SRB2) without waiting to first complete the set-up of the RRC connection with the MeNB 2a; or may proceed yet further and exchange non-access stratum (NAS) messages (related to security and authentication) via the SeNB 2b and SRB2, without waiting to first complete the set-up of the RRC connection with the MeNB 2a.

In the example described above, the UE 8 is camped in IDLE mode on both the cells and obtains respective contention-based RACH configuration information from the system information broadcast by each cell. In one variation, the system information broadcast by one of the cells includes the necessary contention-based RACH configuration information for both cells, and the UE obtains all the necessary contention-based RACH configuration information for both cells via one cell. In such variation, the system information for the second cell may be tagged against the physical cell identifier (PCI) for the second cell. The system information for the second cell that is broadcast via the first cell may include the whole of the system information for the second cell, or it may include only a part of the system information for the second cell, with the remainder obtainable via dedicated signalling or in-band signalling as part of data received via the first cell.

In another variation, the second cell is one of a group of cells for which the UE 8 has previously received and stored information about how the physical cell identifier (PCI) maps to RACH resources for contention-based random access. Upon detecting the PCI for the second cell, the UE maps the detected PCI for the second cell to RACH resources for the second cell, based on mapping information stored at the UE. In said group of cells, more than one cell may share the same PCI and contention-based RACH resources. More generally, the UE 8 may store and up-date RACH configuration information based on the system information it detects in broadcasts by the radio access network.

Also, it is noted that the UE 8 is not limited to only sending/receiving data to/from the core network via two or more simultaneous radio connections. The UE may also be capable of switching to sending/receiving data to/from the core network via a single radio connection. The steps/points, signaling messages and related functions described above in Figures 4 to 7 are in no absolute chronological order, and some of the steps/points may be performed simultaneously or in an order differing from the given one. Other functions may also be executed between the steps/points or within the steps/points and other signaling messages sent between the illustrated messages. Some of the steps/points or part of the steps/points can also be left out or replaced by a corresponding step/point or part of the step/point.

An embodiment provides an apparatus which may be a user device or any suitable apparatus capable to carry out processes described above in relation to Figure 5 (and/or Figure 4).

It should be appreciated that the apparatus may include or otherwise be in communication with a control unit, one or more processors or other entities capable of carrying out operations according to the embodiments described by means of Figure 5. It should be understood that each block of the flowchart of Figure 5 and any combination thereof may be implemented by various means or their combinations, such as hardware, software, firmware, one or more processors and/or circuitry.

Figure 2 illustrates a simplified block diagram of an apparatus according to an embodiment in relation to Figure 5. An apparatus 8 includes facilities in control unit 203 (including one or more processors, for example) to carry out functions of embodiments according to Figure 5. The facilities may be software, hardware or combinations thereof as described in further detail below. The parts/units/modules needed for reception and transmission may be comprised in the apparatus or they may be located outside the apparatus the apparatus being operationally coupled to them. The apparatus may also include or be coupled to one or more internal or external memory units.

Another example of an apparatus may include at least one processor 203 and at least one memory 217 including a computer program code, the at least one memory and the computer program code configured to, with the at least one processor, cause the apparatus at least to: monitor, by a user device, at least one candidate for a secondary cell, select at least one of the at least one candidate for the secondary cell as a secondary cell; and if no primary cell connection exists, carry out a system access to a primary cell and to the at least one secondary cell, wherein the system access to the primary cell and to the at least one secondary cell comprise a same user device system access identity, obtain radio connection configuration information for the primary cell in a response to the system access to the primary cell, carry out a radio connection setup for the primary cell, or if a primary cell connection exists, carry out a system access to the at least one secondary cell by using a same user device system access identity than that used in the primary cell connection, and obtain radio connection setup configuration information for the at least one secondary cell in a response to the system access to the at least one secondary cell, and carry out a radio connection setup for the secondary cell. The data processor 203 and memory 217 may be provided on an appropriate circuit board and/or in chipsets.

Yet another example of an apparatus comprises means 203 for monitoring, by a user device, at least one candidate for a secondary cell, means 203 for selecting at least one of the at least one candidate for the secondary cell as a secondary cell, means 203 for carrying out a system access to a primary cell and to the at least one secondary cell, wherein the system access to the primary cell and to the at least one secondary cell comprise a same user device system access identity (if no primary cell connection exists), means 203 for obtaining radio connection configuration information for the primary cell in a response to the system access to the primary cell, means 203 for carrying out a radio connection setup for the primary cell, and/or means 203 for carrying out a system access to the at least one secondary cell by using a same user device system access identity than (if a primary cell connection exists), means 203 for carrying out a system access to the at least one secondary cell by using a same user device system access identity than that used in the primary cell connection, means 203 for obtaining radio connection setup configuration information for the at least one secondary cell in a response to the system access to the at least one secondary cell, and means 203 carrying out a radio connection setup for the secondary cell.

An embodiment provides an apparatus which may be any node (such as eNodeB), host, server or a user device (small cells may be generated by user devices) or any suitable apparatus capable to carry out processes described above in relation to Figure 6 and/or 7 although here and in the following it has to be intended that whenever reference is made to embodiments or apparatuses capable to carry out the processes of "Figure 6 and/or 7", the case of figure 7 taken alone does not fall under the scope of the claims.

It should be appreciated that the apparatus may include or otherwise be in communication with a control unit, one or more processors or other entities capable of carrying out operations according to the embodiments described by means of Figure 6 and/or 7. It should be understood that each block of the flowchart of Figure 6 and/or 7 and any combination thereof may be implemented by various means or their combinations, such as hardware, software, firmware, one or more processors and/or circuitry.

Figure 3 illustrates a simplified block diagram of an apparatus according to an embodiment in relation to Figure 6 and/or 7 (and/or Figure 4). An apparatus 2 includes facilities in control unit 306 (including one or more processors, for example) to carry out functions of embodiments according to Figure 6 and/or 7. The facilities may be software, hardware or combinations thereof as described in further detail below. The parts/units/modules needed for reception and transmission may be comprised in the apparatus or they may be located outside the apparatus the apparatus being operationally coupled to them. The apparatus may also include or be coupled to one or more internal or external memory units.

Another example of an apparatus may include at least one processor 306 and at least one memory 307 including a computer program code, the at least one memory and the computer program code configured to, with the at least one processor, cause the apparatus at least to: obtain a system access to a primary cell from a user device, carry out a radio connection setup for the user device for the primary cell in a response to the system access and/or obtain an indication of a system access of the user device to at least one secondary cell from the at least one secondary cell, and carry out a resource configuration for the user device with the secondary cell in response to the obtaining the indication, and carry out a radio connection setup for the user device for the secondary cell based on the resource configuration and/or obtain a system access for a secondary cell from a user device, transmit a system access indication of the user device to a primary cell, and carry out resource configuration for the user device for the secondary cell with the primary cell. The memory 307 and the data processor 306 may be provided on an appropriate circuit board and/or in chipsets.

Yet another example of an apparatus comprises means 307 for obtaining a system access to a primary cell from a user device, means 307 for carrying out a radio connection setup for the user device for the primary cell in a response to the system access and/or obtain an indication of a system access of the user device to at least one secondary cell from the at least one secondary cell, means 307 for carrying out a resource configuration for the user device with the secondary cell in response to the obtaining the indication, and means 307 for carrying out a radio connection setup for the user device for the secondary cell based on the resource configuration and/or means 307 for obtaining a system access for a secondary cell from a user device, means 307 for transmitting a system access indication of the user device to a primary cell, and means 307 for carrying out resource configuration for the user device for the secondary cell with the primary cell.

An apparatus may in general include at least one processor, controller or a unit or module designed for carrying out functions of embodiments operationally coupled to at least one memory unit (or service) and to typically various interfaces. Further, the memory units may include volatile and/or non-volatile memory. The memory unit may store computer program code and/or operating systems, information, data, content or the like for the processor to perform operations according to embodiments described above in relation to Figure 5, 6 and/or 7. Each of the memory units may be a random access memory, hard drive, etc. The memory units may be at least partly removable and/or detachably operationally coupled to the apparatus. The memory may be of any type suitable for the current technical environment and it may be implemented using any suitable data storage technology, such as semiconductor-based technology, flash memory, magnetic and/or optical memory devices. The memory may be fixed or removable.

The apparatus may be, include or be associated with at least one software application, module, unit or entity configured as arithmetic operation, or as a program (including an added or updated software routine), executed by at least one operation processor. Programs, also called program products or computer programs, including software routines, applets and macros, may be stored in any apparatus-readable data storage medium and they include program instructions to perform particular tasks. The data storage medium may be a non-transitory medium. The computer program or computer program product may also be loaded to the apparatus. A computer program product may comprise one or more computer-executable components which, when the program is run, for example by one or more processors possibly also utilizing an internal or external memory, are configured to carry out any of the embodiments or combinations thereof described above by means of Figure 5, The one or more computer-executable components may be at least one software code or portions thereof. Computer programs may be coded by a programming language or a low-level programming language. Modifications and configurations required for implementing functionality of an embodiment may be performed as routines, which may be implemented as added or updated software routines, application circuits (ASIC) and/or programmable circuits. Further, software routines may be downloaded into an apparatus. The apparatus, such as a node device, or a corresponding component, may be configured as a computer or a microprocessor, such as single-chip computer element, or as a chipset, including at least a memory for providing storage capacity used for arithmetic operation and an operation processor for executing the arithmetic operation.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, digitally enhanced circuits, other electronic units designed to perform the functions described herein, or a combination thereof. For firmware or software, the implementation may be carried out through modules of at least one chip set (e.g., procedures, functions, and so on) that perform the functions described herein. The software codes may be stored in a memory unit and executed by processors. The memory unit may be implemented within the processor or externally to the processor. In the latter case it may be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. An apparatus comprising
means (203) for carrying out a system access to a primary cell for a primary cell connection;
means (203) for obtaining radio connection configuration information for the primary cell in a response to the system access to the primary cell;
means (203) for carrying out a radio connection setup for the primary cell;
means (203) for monitoring at least one candidate for a secondary cell for multi-connectivity, when a primary cell connection exists;
**characterized in that** the apparatus comprises:
means (203) for selecting at least one of the at least one candidate for the secondary cell as a secondary cell, and,
means (203) for carrying out a system access to the at least one secondary cell for at least one secondary cell connection by using a same user device system access identity as that used in the primary cell connection for controlling the primary cell connection and the at least one secondary cell connection of the multi-connectivity, means (203) for obtaining radio connection setup configuration information for the at least one secondary cell in a response to the system access to the at least one secondary cell, and means (203) for carrying out a radio connection setup for the secondary cell for the multi-connectivity.

2. The apparatus of claim 1, further comprising:
means for obtaining system information of the at least one secondary cell for the system access to the at least one secondary cell as signaled by the primary cell.

3. The apparatus of claim 1 or 2, wherein the monitoring further comprises acquiring system information of the at least one secondary cell for the system access to the at least one secondary cell.

4. The apparatus of any preceding claim 1 to 3, wherein the monitoring is carried out as a part of idle mode operations.

5. The apparatus of any preceding claim 1 to 4, wherein the system access identity is a contention resolution identity-type identification.

6. An apparatus comprising:
means for providing a primary cell;
means (306) for obtaining a system access to the primary cell for a primary cell connection from a user device; and
means (306) for carrying out a radio connection setup for the user device for the primary cell in a response to the system access,
**characterised in that** the apparatus comprises:
means (306) for obtaining from at least one secondary cell an indication of a system access of the user device to the at least one secondary cell for at least one secondary cell connection, wherein the system access to the primary cell and the system access to the at least one secondary cell comprise a same user device system access identity for controlling the primary cell connection and the at least one secondary cell connection of a multi-connectivity, wherein the system access indication comprises the user device system access identity;
means (306) for carrying out a resource configuration comprising bearer allocation for the multi-connectivity for the user device with the secondary cell in response to the obtaining the indication, and
means (306) for transmitting a RRC connection reconfiguration message for carrying out a radio connection setup for the user device for the secondary cell based on the resource configuration for the multi-connectivity.

7. The apparatus of claim 6, further comprising:
means for transmitting system information of the at least one secondary cell for the user device's system access to the at least one secondary cell.

8. The apparatus of claim 7, wherein the system information further comprises a random access channel allocation.

9. The apparatus of any preceding claim 6 to 8, further comprising:
means for transmitting to the user device, rules for selection of the at least one secondary cell, the rules defining the selection being at least one of the following: service-specific, capability-specific and mobility profile-specific.

## Patentansprüche

1. Vorrichtung umfassend:
Mittel (203) zum Ausführen eines Systemzugriffs auf eine Primärzelle für eine Primärzellenverbindung;
Mittel (203) zum Erhalten von Funkverbindungs-Konfigurationsinformationen für die Primärzelle als Reaktion auf den Systemzugriff auf die Primärzelle;
Mittel (203) zum Durchführen eines Funkverbindungsaufbaus für die Primärzelle;
Mittel (203) zum Überwachen mindestens eines Kandidaten für eine Sekundärzelle für Mehrfachkonnektivität, wenn eine Primärzellenverbindung existiert;
**dadurch gekennzeichnet, dass** die Vorrichtung umfasst:
Mittel (203) zum Auswählen mindestens eines der mindestens einen Kandidaten für die Sekundärzelle als Sekundärzelle, und
Mittel (203) zum Ausführen eines Systemzugriffs auf die mindestens eine Sekundärzelle für mindestens eine Sekundärzellenverbindung unter Verwendung der gleichen Systemzugriffsidentität des Benutzergeräts wie diejenige, die in der Primärzellenverbindung zum Steuern der Primärzellenverbindung und der mindestens einen Sekundärzellenverbindung der Mehrfachkonnektivität verwendet wird,
Mittel (203) zum Erhalten von Funkverbindungsaufbau-Konfigurationsinformationen für die mindestens eine Sekundärzelle als Reaktion auf den Systemzugriff auf die mindestens eine Sekundärzelle, und
Mittel (203) zum Durchführen eines Funkverbindungsaufbaus für die Sekundärzelle für die Mehrfachkonnektivität.

2. Vorrichtung nach Anspruch 1, die ferner umfasst:
Mittel zum Erhalten von Systeminformationen der mindestens einen Sekundärzelle für den Systemzugriff auf die mindestens eine Sekundärzelle, wie von der Primärzelle signalisiert.

3. Vorrichtung nach Anspruch 1 oder 2, wobei das Überwachen ferner das Erfassen von Systeminformationen der mindestens einen Sekundärzelle für den Systemzugriff auf die mindestens eine Sekundärzelle umfasst.

4. Vorrichtung nach einem der vorstehenden Ansprüche 1 bis 3, wobei die Überwachung als Teil von Vorgängen im Ruhemodus ausgeführt wird.

5. Vorrichtung nach einem der vorstehenden Ansprüche 1 bis 4, wobei die Systemzugriffsidentität eine Identifikation vom Typ Konfliktlösungsidentität ist.

6. Vorrichtung umfassend:
Mittel zum Bereitstellen einer Primärzelle;
Mittel (306) zum Erhalten eines Systemzugriffs auf die Primärzelle für eine Primärzellenverbindung von einem Benutzergerät; und
Mittel (306) zum Ausführen eines Funkverbindungsaufbaus für das Benutzergerät für die Primärzelle als Reaktion auf den Systemzugriff,
**dadurch gekennzeichnet, dass** die Vorrichtung umfasst:
Mittel (306) zum Erhalten, von mindestens einer Sekundärzelle, einer Angabe eines Systemzugriffs des Benutzergeräts auf die mindestens eine Sekundärzelle für mindestens eine Sekundärzellenverbindung, wobei der Systemzugriff auf die Primärzelle und der Systemzugriff auf die mindestens eine Sekundärzelle eine gleiche Systemzugriffsidentität des Benutzergeräts zum Steuern der Primärzellenverbindung und der mindestens einen Sekundärzellenverbindung einer Mehrfachkonnektivität umfasst, wobei die Systemzugriffsangabe die Systemzugriffsidentität des Benutzergeräts umfasst;
Mittel (306) zum Ausführen einer Ressourcenkonfiguration, die eine Trägerzuweisung für die Mehrfachkonnektivität für das Benutzergerät mit der Sekundärzelle umfasst, als Reaktion auf das Erhalten der Angabe, und
Mittel (306) zum Senden einer RRC-Verbindungsrekonfigurationsnachricht zum Ausführen eines Funkverbindungsaufbaus für das Benutzergerät für die Sekundärzelle basierend auf der Ressourcenkonfiguration für die Mehrfachkonnektivität.

7. Vorrichtung nach Anspruch 6, die ferner umfasst:
Mittel zum Senden von Systeminformationen der mindestens einen Sekundärzelle für den Systemzugriff des Benutzergeräts auf die mindestens eine Sekundärzelle.

8. Vorrichtung nach Anspruch 7, wobei die Systeminformationen ferner eine Kanalzuweisung mit Direktzugriff umfassen.

9. Vorrichtung nach einem der Ansprüche 6 bis 8, die ferner umfasst:
Mittel zum Senden von Regeln zur Auswahl der mindestens einen Sekundärzelle an das Benutzergerät, wobei die Regeln, die die Auswahl definieren, mindestens eines der folgenden sind: dienstspezifisch, fähigkeitsspezifisch und bewegungsprofilspezifisch.

## Revendications

1. Appareil comprenant
des moyens (203) pour effectuer un accès système à une cellule primaire pour une connexion de cellule primaire ;
des moyens (203) pour obtenir des informations de configuration de connexion radio pour la cellule primaire en réponse à l'accès système à la cellule primaire ;
des moyens (203) pour effectuer un établissement de connexion radio pour la cellule primaire ;
des moyens (203) pour surveiller au moins un candidat pour une cellule secondaire pour la multiconnectivité, lorsqu'une connexion de cellule primaire existe ;
**caractérisé en ce que** l'appareil comprend :
des moyens (203) pour sélectionner au moins un des au moins un candidat pour la cellule secondaire en tant que cellule secondaire, et,
des moyens (203) pour effectuer un accès système à la au moins une cellule secondaire pour au moins une connexion de cellule secondaire en utilisant une même identité d'accès système de dispositif utilisateur que celle utilisée dans la connexion de cellule primaire pour commander la connexion de cellule primaire et la au moins une connexion de cellule secondaire de la multiconnectivité,
des moyens (203) pour obtenir des informations de configuration d'établissement de connexion radio pour la au moins une cellule secondaire en réponse à l'accès système à la au moins une cellule secondaire, et
des moyens (203) pour effectuer un établissement de connexion radio pour la cellule secondaire pour la multiconnectivité.

2. Appareil selon la revendication 1, comprenant en outre :
des moyens pour obtenir des informations système de la au moins une cellule secondaire pour l'accès système à la au moins une cellule secondaire tel que signalé par la cellule primaire.

3. Appareil selon la revendication 1 ou 2, dans lequel la surveillance comprend en outre l'acquisition d'informations système de la au moins une cellule secondaire pour l'accès système à la au moins une cellule secondaire.

4. Appareil selon l'une quelconque des revendications précédentes 1 à 3, dans lequel la surveillance est effectuée dans le cadre d'opérations en mode veille.

5. Appareil selon l'une quelconque des revendications précédentes 1 à 4, dans lequel l'identité d'accès système est une identification de type identité de résolution de conflit.

6. Appareil comprenant :
des moyens pour fournir une cellule primaire ;
des moyens (306) pour obtenir un accès système à la cellule primaire pour une connexion de cellule primaire à partir d'un dispositif utilisateur ; et
des moyens (306) pour effectuer un établissement de connexion radio pour le dispositif utilisateur pour la cellule primaire en réponse à l'accès système,
**caractérisé en ce que** l'appareil comprend :
des moyens (306) pour obtenir, à partir d'au moins une cellule secondaire, une indication d'un accès système du dispositif utilisateur à la au moins une cellule secondaire pour au moins une connexion de cellule secondaire, dans lequel l'accès système à la cellule primaire et l'accès système à la au moins une cellule secondaire comprennent une même identité d'accès système de dispositif utilisateur pour commander la connexion de cellule primaire et la au moins une connexion de cellule secondaire d'une multiconnectivité, dans lequel l'indication d'accès système comprend l'identité d'accès système de dispositif utilisateur ;
des moyens (306) pour effectuer une configuration de ressources comprenant l'attribution de supports pour la multiconnectivité pour le dispositif utilisateur avec la cellule secondaire en réponse à l'obtention de l'indication, et
des moyens (306) pour transmettre un message de reconfiguration de connexion RRC pour effectuer un établissement de connexion radio pour le dispositif utilisateur pour la cellule secondaire sur la base de la configuration de ressources pour la multiconnectivité.

7. Appareil selon la revendication 6, comprenant en outre :
des moyens pour transmettre des informations système de la au moins une cellule secondaire pour l'accès système du dispositif utilisateur à la au moins une cellule secondaire.

8. Appareil selon la revendication 7, dans lequel les informations système comprennent en outre une attribution de canal à accès aléatoire.

9. Appareil selon l'une quelconque des revendications précédentes 6 à 8, comprenant en outre :
des moyens pour transmettre au dispositif utilisateur, des règles pour la sélection de la au moins une cellule secondaire, les règles définissant la sélection comme étant au moins une des suivantes : spécifique au service, spécifique à la capacité et spécifique au profil de mobilité.
